# NEUE EUROPÄISCHE PATENTSCHRIFT

(11) **EP 0 371 233 B2**
(45) Veröffentlichungstag und Bekanntmachung des Hinweises auf die Entscheidung über den Einspruch: **05.03.1997**
(45) Hinweis auf die Patenterteilung: 09.03.1994
(21) Anmeldenummer: 89118269.3
(22) Anmeldetag: 02.10.1989
(51) Int. Cl.: G02B 23/24

(54) **Technisches Endoskop**
Technical endoscope
Endoscope technique

(30) Priorität: 30.11.1988 DE 3840389
(43) Veröffentlichungstag der Anmeldung: 06.06.1990
(73) Patentinhaber: Henke-Sass, Wolf GmbH, D-78532 Tuttlingen (DE)
(72) Erfinder: Jonischkeit, Horst, D-7200 Tuttlingen (DE); Lekitsch, Armin, D-7201 Hausen o.V. (DE)
(74) Vertreter: Fehners, Klaus Friedrich, Dipl.-Ing., Dipl.-Wirtsch.-Ing.

(56) Entgegenhaltungen:
- WO-A-87/02473
- GB-A- 2 197 496
- US-A- 3 224 320
- US-A- 3 543 746
- GB Design registration 999229

## Beschreibung

Die Erfindung betrifft ein Endoskop mit einem Sonden-, einem Okular- und einem beide Teile verbindenden Hauptteil, wobei der Sondenteil gegenüber dem Hauptteil drehbar ausgebildet ist, und mit einem am Hauptteil ausgebildeten Handgriff, in dem der ebenfalls am Hauptteil vorgesehene Lichtquellen-Anschluß unmittelbar benachbart angeordnet ist.

Bei solchen, insbesondere für den Einsatz im technischen Bereich vorgesehenen Endoskopen kann die Drehbewegung der Sonde während der Untersuchung, also während des Durchblickes selbst, durchgeführt werden, wobei mit zwei Fingern der das Endoskop am Handgriff haltenden Hand der drehbare Sondenteil über eine am Hauptteil angeordnete Rändelmutter bedienbar ist. Diese Rändelmutter weist einen kleinen, vorspringenden Knopf auf, welcher zur Orientierung der eingestellten Blickrichtung dient. Vorzugsweise hat ein solches Endoskop eine Blickrichtung von 45°, 90° oder 110°, so daß nahezu ein Rundumblick von 360° möglich ist.

Das von dem Lichtquellen-Anschluß herkommende und das eingespeiste Licht leitende Lichtleitkabel ist von dem den Okular- und den Sondenteil miteinander verbindenden Hauptteil des Endoskopes so geführt, daß es sich bei Verdrehen der Sonde frei mitverdrehen kann und nicht etwa abbricht.

Aus diesem Grunde kann der Sondenteil auch nicht unbegrenzt in eine Richtung gedreht werden, sondern nach Verdrehen der Sonde in eine Richtung muß diese bei Erreichen des Anschlages wieder zurückgestellt werden.

Der am Hauptteil vorgesehene Handgriff umfaßt den Lichtquellen-Anschluß, welcher am Hauptteil des Endoskopes vorgesehen ist. Nachteilig bei solchen mit Handgriffen ausgestatteten Endoskopen ist, daß keine Lichtleitkabel unterschiedlicher Dimensionen und auch keine besonderen Handlichtquellen mit Halogenlampe und eingebautem Lüfter angeschlossen werden können. Die eingangs erwähnten, bekannten Endoskope weisen Handgriffe auf, die einer bestimmten Abmessung eines Lichtquellen-Anschlusses genau angepaßt sind, eine leichte und einfache Auswechselbarkeit des Lichtquellen-Anschlusses ist nicht vorgesehen.

Aufgabe der Erfindung ist es deshalb, solche bekannten Endoskope dadurch zu verbessern, daß, ohne auf die Anordnung eines Handgriffes zu verzichten, das Endoskop auch für unterschiedlich ausgebildete Lichtleitkabel und Handlichtquellen verwendet werden kann, andererseits aber der Vorteil eines ergonomisch ausgebildeten Handgriffes erhalten bleibt.

Diese Aufgabe wird bei dem eingangs genannten Endoskop durch die Merkmale des Kennzeichens des Hauptanspruchs gelöst.

Diese abnehmbare Ausbildung des am Hauptteil des Endoskopes vorgesehenen Handgriffes gewährleistet, daß auch solche Lichtleitkabel am Lichtquellen-Anschluß angeschlossen werden können, welche an ihrem Verschlußende voll kunststoffummantelt und deshalb im Außendurchmesser dicker ausgebildet sind als alle herkömmlichen Lichtleitkabel-Modelle. Darüberhinaus können auch anstelle von Lichtleitkabeln Handlichtquellen angeschlossen werden.

In vorteilhafter Weiterbildung der Erfindung weist der Handgriff in seinem Innenraum zwischen den Seitenwandungen eine fest eingebauten Raststift auf, welcher horizontal und senkrecht zur Sondenachse angeordnet und in einem am Lichtquellen-Anschluß bzw. in dem Übergangsbereich zwischen Lichtquellen-Anschluß und Hauptteil angeordneten Einschnitt einrastbar ist.

Vorteilhaft weist der Lichtquellen-Anschluß im Übergangsbereich zum Hauptteil des Endoskopes einen schlitzförmigen Einschnitt auf, welcher in Höhe des Raststiftes des Handgriffes angeordnet ist und mit seiner Öffnung in Blickrichtung des Sondenteiles gerichtet ist.

In weiterer vorteilhafter Ausbildung weist der Einschnitt in einer seiner beiden horizontalen Begrenzungsflächen eine zur Einschnittstiefe senkrecht angeordnete Bohrung auf, in welcher ein federbelasteter Stift eingesetzt ist, der mit seiner halbkugelförmig ausgebildeten Oberseite aus der Bohrung in den Einschnitt vorsteht und in einem annähernd dem Durchmesser des Raststiftes entsprechenden Abstand von dem die Einschnittstiefe begrenzenden Boden angeordnet ist.

Diese Ausbildung gewährleistet, daß der Handgriff über dem in ihm fest angeordneten Raststift nach Einstecken in den Einschnitt durch den federbelasteten Stift gegen unbeabsichtigtes Herausdrücken gesichert ist.

Ein die Erfindung nicht beschränkendes Ausführungsbeispiel ist in den Zeichnungen dargestellt.

Es zeigen
- Fig. 1: eine teilweise geschnittene Seitenansicht auf den Hauptteil des Endoskopes mit Ansatz des Sondenteiles, mit dem Okularteil und dem Handgriff,
- Fig. 2: einen Schnitt gemäß Linie II-II in Fig. 1 und

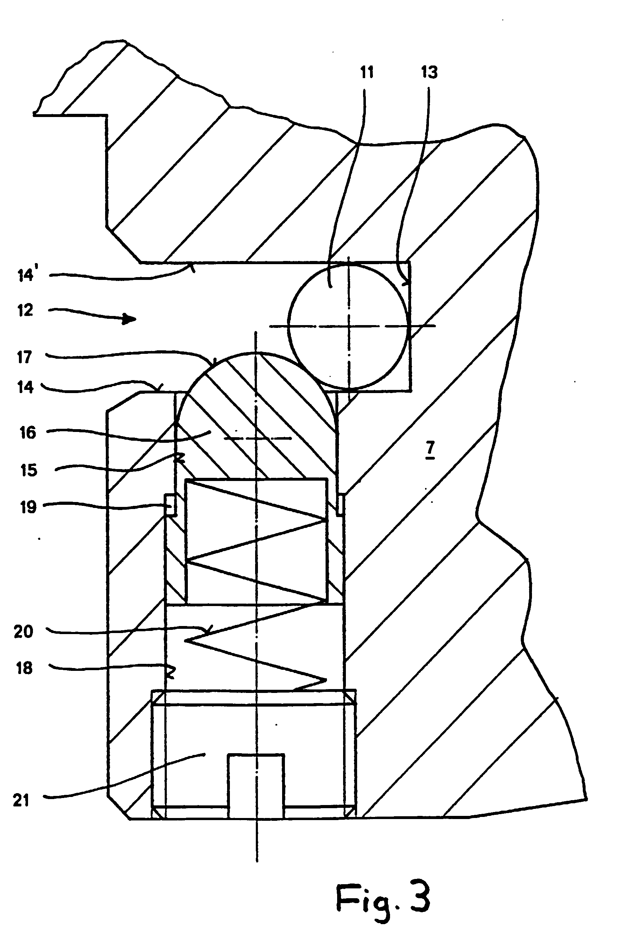

- Fig. 3: einen Teil-Schnitt gemäß kreisförmiger Detail-Herausstellung III in Fig. 1.

Das in den Figuren dargestellte Endoskop für insbesondere technische Zwecke umfaßt im wesentlichen einen Hauptteil 1 mit daran angeordnetem Okularteil 2 und Sondenteil 3, wobei der Übergang zum Sondenteil 3 von der Rändelmutter 4 und einem daran angeordneten Stift 5 gebildet wird.

Am Hauptteil 1 des Endoskopes ist ein Lichtquellen-Anschluß 6 vorgesehen, welcher im Übergangsbereich 7 zum Hauptteil 1 des Endoskopes eine besondere, für einen Handgriff 8 angepaßte Ausbildungsform aufweist.

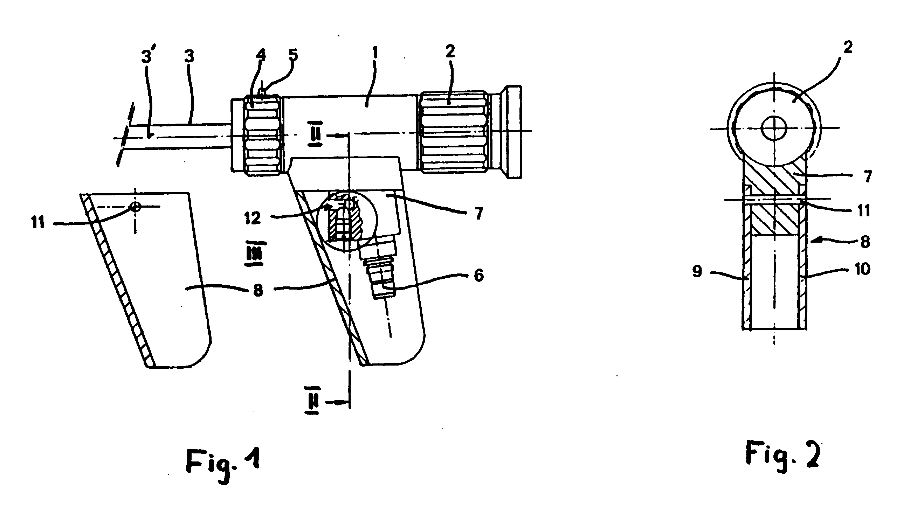

Der in Fig. 1 gesondert dargestellte, vom Übergangsbereich 7 des Hauptteiles 1 des Endoskopes abnehmbare Handgriff 8 ist als hohles, teilweise offenes Bauteil ausgebildet, welches Grifform aufweist und zur Seite des Okularteiles 2, also nach hinten, offen ausgebildet ist. in dem hohlen Handgriff ist der Lichtquellen-Anschluß 6 wie auch teilweise der Übergangsbereich 7 angeordnet.

Der Handgriff 8 weist einen in seinem oberen Teil zwischen den seitlichen Wandungen 9 und 10 und senkrecht zur Sondenachse 3' fest angeordneten Raststift 11 auf, welcher in einen im Übergangsbereich 7 des Lichtquellen-Anschlusses 6 angeordneten Einschnitt 12 einsteht, wobei der Raststift 11 bis zum Anschlag an den die Tiefe des Einschnittes 12 begrenzenden Boden 13 kommt. Die lichte Weite des Einschnittes 12 entspricht dem Durchmesser des Raststiftes 11.

In einer der beiden den Einschnitt 12 bildenden Begrenzungsflächen 14 bzw. 14', in den Zeichnungen ist es die Begrenzungsfläche 14, ist eine zur Einschnittiefe senkrecht angeordnete Bohrung 14 vorgesehen, in welcher ein federbelasteter Stift 16 längsverschieblich angeordnet ist und welcher mit seiner halbkugelförmig ausgebildeten Oberseite 17 aus der Begrenzungsfläche 14 hervorsteht.

Die Bohrung 15 ist in ihrem unteren Bereich 18 aufgeweitet, entsprechend dem erweiterten Durchmesser des Stiftes 16 in diesem Bereich, so daß sich ein die Längsverschieblichkeit des Stiftes 16 begrenzender Anschlag 19 ergibt.

Die in der Bohrung 15 angeordnete Feder 20 stützt sich gegen eine in die Bohrung an ihrem unteren Ende eingesetzte Schraube 21 ab. Beim Einsetzen des Handgriffes 8 an das Endoskop wird dieser mit dem Raststiff 11 in den Einschnitt 12 eingeschoben, wobei der Stift 16 gegen den Druck der Feder 20 in die Bohrung 15 eingedrückt wird und, sobald der Raststift 11 gegen den Boden 13 des Einschnittes 12 zum Anschlag kommt, wieder aus der Bohrung 15 in den Einschnitt 12 hinausfährt und den Raststift 11 und damit den Handgriff 8 verriegelt.

Umgekehrt kann der Handgriff 8 von dem Endoskop dadurch enffernt werden, daß dieser gegen den Widerstand des Stiftes 16 und durch das dadurch erfolgende Eindrücken des Stiftes 16 in die Bohrung 15 in Sondenrichtung gedrückt wird.

## Patentansprüche

1. Endoskop mit einem Sonden-, einem Okular- und einem beide Teile verbindenden Hauptteil, wobei der Sondenteil gegenüber dem Hauptteil drehbar ausgebildet ist, und mit einem am Hauptteil ausgebildeten Handgriff, in dem der ebenfalls am Hauptteil vorgesehene Lichtquellen-Anschluß unmittelbar benachbart angeordnet ist,
**dadurch gekennzeichnet**, daß der Handgriff (8) vom Hauptteil (1) abnehmbar und U-förmig nach hinten, nämlich zur Seite des Okularteils (2) sowie nach oben zum Hauptteil (1) hin und nach unten gänzlich offen ausgebildet und so am Hauptteil (1) befestigbar ist, daß er den Lichtquellen-Anschluß (6) abdeckend umfaßt.

2. Endoskop nach Anspruch 1, dadurch gekennzeichnet, daß der Handgriff (8) in seinem Innenraum zwischen den Seitenwandungen (9; 10) einen fest eingebauten Raststift (11) aufweist, welcher horizontal und senkrecht zur Sondenachse (3') angeordnet und in einem am Lichtquellen-Anschluß (6) bzw. in den Übergangsbereich (7) zwischen Lichtquellen-Anschluß (6) und Hauptteil (1) angeordneten Einschnitt (12) einrastbar ist.

3. Endoskop nach Anspruch 2, dadurch gekennzeichnet, daß der Lichtquellen-Anschluß (6) im Übergangsbereich (7) zum Hauptteil (1) des Endoskopes einen schlitzförmigen Einschnitt (12) aufweist, welcher in Höhe des Raststiftes (11) des Handgriffes (8) angeordnet ist und mit seiner Öffnung in Blickrichtung des Sondenteils (3) gerichtet ist.

4. Endoskop nach Anspruch 3, dadurch gekennzeichnet, daß der Einschnitt (12) in einer seiner beiden horizontalen Begrenzungsflächen (14 bzw. 14') eine zur Einschnittstiefe senkrecht angeordnete Bohrung (15) aufweist, in welcher ein federbelasteter Stift (16) eingesetzt ist, der mit seiner halbkugelförmig ausgebildeten Oberseite (17) aus der Bohrung (15) in den Einschnitt (12) vorsteht, und einem annähernd dem Durchmesser des Raststiftes (11) entsprechenden Abstand von dem die Einschnittstiefe begrenzenden Boden (13) angeordnet ist.

## Claims

1. An endoscope having a probe part, an ocular part and a main part connecting the two, the probe part being contructed to be rotatable with respect to the main part, and having a handle, constructed on the main part, in which the light source connector, which is likewise provided on the main part, is directly adjacently arranged, characterized in that the handle (8) is detachable from the main part (1) and is constructed so as to be U-shaped to the rear, namely to the side of the ocular part (2), and upwards towards the main part (1) and completely open downwards, and can be fastened to the main part (1) in such a way that it encompasses the light source connector (6) in a covering manner.

2. An endoscope according to claim 2 characterized in that the handle (8) in its inner space between the lateral walls (9; 10) has a fixedly built-in stop pin (11) which is arranged horizontally and vertically to the axis of the probe (3') and which can be snapped into a notch (12) arranged at the light source connector (6) or in the bridging region (7) between the light source connector (6) and the main part (1).

3. An endoscope according to claim 3 characterized in that the light source connector (6) in the bridging region (7) to the main part (1) of the endoscope has a slot-like notch (12) which is arranged at the height of the stop pin (11) of the handle (8) and which is directed with its opening in the line of sight of the probe part (3).

4. An endoscope according to claim 4 characterized in that the notch (12) is provided in one of its two horizontal limiting faces (14 or 14) with a bore (15) which is vertical to the depth of the notch and into which a spring-loaded pin (16) is inserted that protrudes from the bore (15) into the notch (12) with its upper side (17) which is in the form of a hemisphere and which is arranged at a distance from the base (13) delimiting the depth of the notch that corresponds approximately to the diameter of the stop pin (11).

## Revendications

1. Endoscope comportant une partie sonde, une partie oculaire et une partie principale reliant ces deux parties, la partie sonde étant configurée de manière à pouvoir tourner par rapport à la partie principale et comportant une poignée, formée sur la partie principale, dans laquelle est placé, à proximité immédiate, le branchement aux sources lumineuses, prévu également sur la partie principale, caractérisé en ce que la poignée (8) peut être enlevée de la partie principale (1) et est totalement ouverte en U vers l'arrière, à savoir vers le côté de la partie oculaire (2) ainsi que vers le haut vers la partie principale (1) et vers le bas, et peut être fixée sur la partie principale (1), de manière à entourer en le recouvrant le branchement (6) aux sources lumineuses.

2. Endoscope selon la revendication 1, caractérisé en ce que la poignée (8) comporte, dans son volume intérieur, entre les parois latérales (9 ; 10), une tige d'arrêt (11) montée fixe qui est disposée horizontalement et perpendiculairement à l'axe (3') de la sonde et qui peut s'encliqueter dans une entaille (12) située sur le branchement (6) aux sources lumineuses ou dans la zone de transition (7), entre le branchement (6) et la partie principale (1).

3. Endoscope selon la revendication 2, caractérisé en ce que le branchement (6) aux sources lumineuses présente, dans la zone de transition (7) avec la partie principale (1) de l'endoscope, une entaille (12) en forme de fente, qui est située à hauteur de la tige d'arrêt (11) de la poignée (8) et dont l'ouverture est orientée dans le sens de la partie sonde (3).

4. Endoscope selon la revendication 3, caractérisé en ce que l'entaille (12) présente, dans l'une de ses deux surfaces de délimitation (14 ou 14') horizontales, un alésage (15) perpendiculaire à la profondeur de l'entaille, dans lequel est insérée une tige (16) soumise à l'action d'un ressort et qui, avec sa face supérieure (17) semi-sphérique, dépasse de l'alésage (15) dans l'entaille (12) et est située à une distance, correspondant à peu près au diamètre de la tige d'arrêt (11), du fond (13) délimitant la profondeur de l'entaille.
